# EUROPEAN PATENT APPLICATION

(11) **EP 2 830 127 A1**
(43) Date of publication of application: **28.01.2015**
(21) Application number: 13178124.7
(22) Date of filing: 26.07.2013
(51) Int. Cl.: H01M 4/86, H01M 4/88, H01M 8/02, H01M 4/02

(54) **Air electrode sintering of temporarily sealed metal-supported solid oxide cells**

(71) Applicant: Topsøe Fuel Cell A/S, 2800 Kgs. Lyngby (DK)
(72) Inventor: McKENNA, Brandon John, 2900 Hellerup (DK); KLITHOLM, Cliver Søren, 2860 Søborg (DK)
(74) Representative: Haldor Topsøe A/S

(57) **Abstract**

The invention concerns a process for sintering the air electrode of a temporarily sealed metal-supported solid oxide fuel cell (SOFC) or solid oxide electrolysis cell (SOEC), whereby the air electrode layer can be sintered prior to stack conditioning. This way the metal-supported cells will not need to be subjected to high temperatures, i.e. temperatures above 800°C or even above 700°C. Therefore they never become soft, and they have a substantially lower risk of being damaged due to high compressive forces. Thus they will also have less leakage and risk of oxidation damage.

## Description

The present invention relates to air electrode sintering of temporarily sealed solid oxide cells. More specifically, the invention concerns a process for sintering the air electrode of a temporarily sealed solid oxide cell and a process of preparing a solid oxide cell stack from such temporarily sealed solid oxide cells, where said solid oxide cell stack can be either a solid oxide fuel cell (SOFC) stack or a solid oxide electrolysis cell (SOEC) stack.

Within the field of metal-supported cells, the main limiting step to successful stacking is the conditioning procedure. The fundamental problem with this step is that the air electrode layer of the cell must be sintered, usually requiring temperatures above 800°C. Such high temperatures make these metal-supported cells soft, i.e. mechanically weak, and they are therefore prone to damage when they are subjected to compression forces. If, in order to avoid such damage, lower compression forces are used, then there is a substantial risk of oxygen leaking into the anode and causing metal corrosion, which also damages the metal-supported cells.

The problem underlying the present invention is how to prepare a sintered air electrode for a solid oxide cell, where the conditions required to sinter the air electrode do not jeopardize the mechanical integrity of the electrolyte, neither by mechanical nor corrosive effects.

A number of prior art references deal with the problem of metal support oxidation or degradation when disposed to high temperatures. Thus, US 2010/0186220 A1 describes a method for the fabrication of a metal-supported solid oxide fuel cell (SOFC) comprising a metallic support, on which a fuel electrode layer, an electrolyte and an air electrode layer are stacked in turn. The fabrication method includes forming the fuel electrode layer and the electrolyte on the metallic support, forming the green air electrode layer by coating a slurry containing an air electrode material on the electrolyte and sintering the green air electrode layer during normal operation of the metal-supported SOFC. The sintering is in-situ, and the conditions are confined to stack operating conditions.

EP 2 259 373 A1 concerns a solid oxide fuel cell comprising a metallic support. The object is to provide a cell which is relatively cheap and at the same time more robust than previously known cells. The problem when using a metallic support is that during sintering electrode material from the active fuel electrode layer interdiffuses with the metallic support, thereby for instance causing a detrimental phase transformation of the support from a ferritic to an austenite phase. According to this EP application, this can be avoided by making the metallic support as a graded cermet, ending in an electron conducting oxide, or by making the active fuel electrode layer as a porous layer into which the active fuel electrode material is impregnated after sintering. This EP reference does not address air electrode sintering.

US 2008/0176113 describes systems and methods for high performance in-situ SOFC air electrodes, demonstrating self-improved performance over time. Performance degradation rates in a metal-supported SOFC can be severe at high processing temperatures, and at the same time the use of a metal substrate for an SOFC is critical for the cost reduction of SOFC systems. Therefore reduction of the cell fabrication temperature and simplification of the cell processing steps are crucial when building an economically feasible SOFC system with better long-term stability, and thus the US reference describes a fabrication method for SOFCs, where both air electrodes and air electrode contacts are prepared in-situ with the fabrication temperature not exceeding the SOFC operation temperature.

From US 2010/0098996 a solid oxide fuel cell is known, said cell including a metal frame, a pre-treated porous metal substrate, a fuel electrode layer, an electrolyte layer, an air electrode interlayer and an air electrode current collecting layer. The supporting structure of the cell, consisting of the porous metal substrate and the metal frame, serves to increase the resistance to cell deformation at high temperatures and to secure cell flatness, mechanical strength, supporting strength for cell stack manufacture and thermal conductivity of cell and stack. The sintering of the porous metal substrate is performed at high temperature and under a high pressure to achieve a rapid sintering, which lowers the degradation of the cell. Essentially, this US reference concerns the use of plasma spraying applied to different layers of a metal-supported cell. Plasma spraying is one possible method for depositing a sintered ceramic, but it has serious drawbacks, such as fabrication costs and the difficulty of forming a layer having sufficient porosity and pore connectivity to enable gas diffusion.

Finally, US 7,632,593 deals with a bipolar plate supported solid oxide fuel cell with a sealed fuel electrode compartment. The cell includes an air electrode, an electrolyte and a fuel electrode, all supported on a metallic bipolar plate assembly including gas flow fields and the bipolar plate itself, which is gas impermeable. The electrolyte and the fuel electrode are sealed into a fuel electrode compartment with a metal perimeter seal. An improved method of sealing is provided by extending the metal seal around the entire perimeter of the cell between an electrolyte and an interconnect or bipolar plate to form the air electrode compartment. During a single step sintering process performed at a high temperature, the metal seal bonds to the edges of the electrolyte and fuel electrode layers, a metal foam flow field and the bipolar plate to form a gas-tight compartment. After sintering of the assembly, which is done simultaneously with the stack conditioning, inlet and outlet holes are drilled into the seal and metal tubing is brazed into the holes, forming gas-tight connections to the anode compartment.

A desirable way to solve the problem underlying the present invention is to sinter the air electrode layer prior to stack conditioning, because then the stacked metal-supported cells will not need to be subjected to high temperatures, i.e. above 800°C or even above 700°C. This means that they will never again need to become soft, they will have a substantially lower risk of being damaged due to high compressive forces, and thus they will also have less leakage and risk of oxidation damage.

The invention therefore concerns a process for sintering the air electrode of a temporarily sealed solid oxide cell, said process comprising
a first process of protecting the porous metal of the cell through covering said porous metal with a non-porous metal sheet, thereby creating an enclosure, which is done by attaching the fuel electrode of a cell not having a sintered air electrode towards a non-porous metal object by forming a seal located within the perimeter of the cell while not exposing the cell support area outside the sealing zone to temperatures higher than 500°C in air for more than 30 minutes, and further comprising
a second process of heating the un-sintered air electrode layer as applied to the cell to a temperature higher than 700°C in the presence of a gas with a non-reducing composition while preventing exposure of the enclosed active area of the fuel electrode to the same gas by action of the seal and without any additional flow of gases containing hydrogen.

During air electrode sintering at temperatures above 700°C in an oxidizing atmosphere, the porous metal of the metal-supported cell must be protected from fatal oxidation. In the process according to the invention, the porous metal is protected by a metal sheet which has been welded to the appropriate side of the cell. The welds and the sheet itself prevent most or all oxygen diffusion into the enclosed volume, while the air electrode can be sintered fully exposed to air. The preferred method of welding is laser welding by use of a fibre laser. In this case the weld zone is confined to a narrow region.

There is a possibility that the welding process will create microcrack defects in the electrolyte of the metal-supported cell. Most likely these cracks will not allow any massive diffusion of harmful air into the enclosed volume. Should they do so, however, then the microcracks can be covered with a glass layer having an appropriate melting point.

If the enclosed volume is hermetically sealed, it will contain the same atmosphere as used during the welding process (e.g. atmospheric air, nitrogen or a vacuum). During heating, the gas will expand by 3-4 times, and such expansion might deform the unit. In this case it is desirable either to weld in vacuum, or to include a "venting" defect which is small enough to prevent fast oxidation, or to apply an appropriate compression force over the cell surface in order to counteract expansive forces. In the preferred embodiment, this compression force is applied to maintain flatness.

If the enclosed volume initially contains oxygen, then this oxygen will react with the metal components (i.e. metal-supported cell and interconnect). However, the amount of enclosed oxygen is very low, and the complete reaction can only form a very thin (of nanometer size order) oxide scale. Moreover, if the interconnect contains a material or a coating with fast oxidation kinetics, then the metal support will only be insignificantly affected.

After the sintering of the air electrode is completed and the welded metal-supported cell unit has cooled down, any one of various cutting techniques can be used to break open the unit, so that the porous metal of the metal-supported cell can be exposed to the flow of fuel when it is placed in a fuel cell stack.

The air electrode of the solid oxide cell is preferably sintered at temperatures between 700°C and 900°C.

A preferred embodiment of the above procedure consists of replacing the metal sheet with the metal repeat unit of the stack, which most especially includes the interconnect. In this embodiment, the interconnect unit must start having no holes (manifolding) allowing passage of air into the cell. In the final stage of this embodiment, that is after the air electrode sintering, the manifold holes are cut into the interconnect and/or the cell, depending on the stack design chosen.

As an alternative embodiment, the same results can be achieved by using interconnects and/or cells which already have manifold holes cut into them. For this embodiment to work, the holes need to be covered with pieces of a dense material and sealed with glass. Subsequently the glass seals must be broken at room temperature.

In the process of the invention, a compression force of between 10 and 1000 g/cm² is preferably applied to the cell. There either is a vacuum inside the sealed cell, or the gas enclosed inside the sealed cell is selected from the group consisting of ambient air, nitrogen, noble gases and any of these in combination with up to 5% hydrogen.

The non-porous metal object is preferably an interconnect for use in a solid oxide fuel cell or electrolysis cell stack. It is preferred that the interconnect is a bipolar plate.

The preferred interconnect repeat-unit is a single metal unit, because then only one weld is required. However, stack designs having various spacers can also be used by welding the multiple parts together.

A solid oxide cell stack can be prepared by a procedure comprising (a) preparing the desired sealed solid oxide cells and sintering the air electrode as described, (b) cutting inlet/outlet holes into the area of the sealed solid oxide cells and into the area of their adjoined interconnects, (c) applying an electrically non-conducting stack sealing material into the air electrode face of the solid oxide cells and (d) stacking and sealing the cells.

The inlet/outlet holes in the above step (b) can be cut by any method known per se. It is preferred that the sealing material of step (c) above is a glass having a softening point below 775°C.

The stack can be conditioned e.g. by heating the stack to a temperature above 650°C while applying a compression force. Compared to previously known processes for in-situ air electrode sintering, the novel process according to the invention presents a number of advantages. More specifically, the process of the invention
- greatly lowers the risk of mechanical damage to the electrolyte of the cell,
- permits stack conditioning to be completed at a lower temperature (e.g. the operation temperature),
- permits a high compression force due to this lower conditioning temperature, thereby decreasing the amount of harmful gas leakage,
- creates a much more uniform sintering of the air electrode, so that certain portions of the cell area will not be better sintered others, and
- permits inspection of the cells prior to stacking, so that any defective units may be rejected, whereby a later stack failure can be avoided.

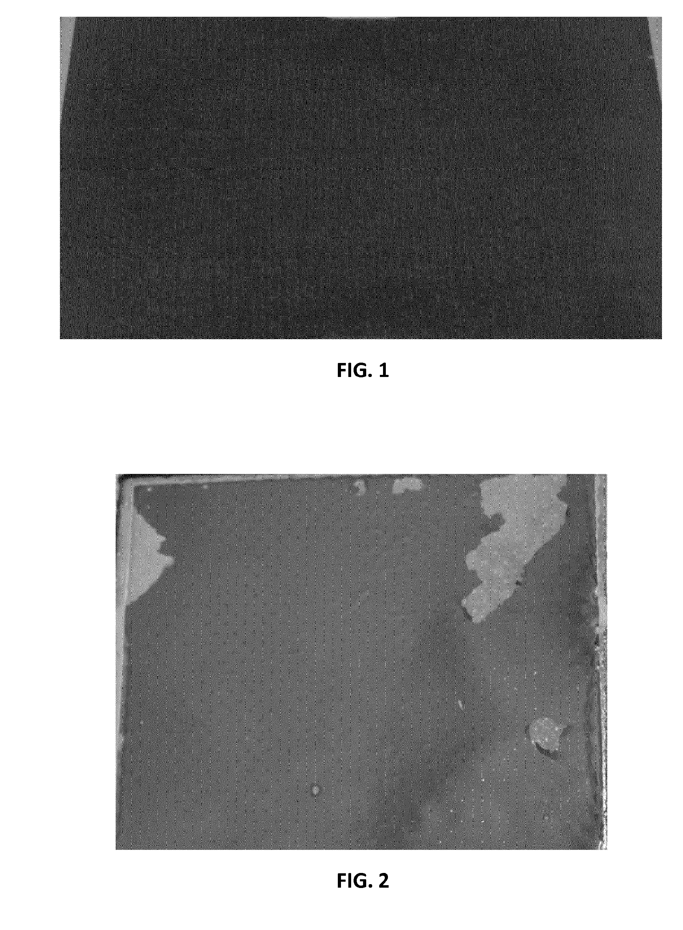

These advantages are visibly shown in the appended figures 1 and 2, which are photographs of sintered air electrodes. The air electrode in Fig. 1 was sintered by the ex situ process according to the invention, while the air electrode in Fig. 2 was sintered by a standard in situ treatment, following stack disassembly. It can be clearly seen that the ex situ sintering according to the invention produces a smooth air electrode without defects, whereas the in situ process markedly increases the risk of delamination, discoloration and electrolyte damage.

The invention will be described in more detail in the following example.

### Example

In this example, applicant's own etched interconnect (as described in WO 2012/143118) was chosen. After the etching process, the interconnect was cut as usual with the exception that the manifold holes were not cut. Then the interconnect was subjected to a surface treatment in such a way that the interconnect is capable of oxidizing. A metal-supported half-cell (which is a cell not having an air electrode) was cut to match the size of the interconnect and then laser welded onto the prepared interconnect using a fiber laser and laser welding parameters which are known to create a dense seal. The laser was applied from the electrolyte side of the cell down to the interconnect underneath, and this was done in a normal air atmosphere. After welding, a minor presence of microcracks could be observed in the electrolyte of the cell. In this instance it was decided not to conceal the cracks with a layer of glass, because these defects would be expected not to introduce much, if any damage.

Then an air electrode layer was applied on top of the half-cell, this time using screen printing. Screen printing is much easier to perform on such welded units because the cell unit is fixed completely flat. After application of the air electrode, the unit was heated in a furnace in the presence of air. After a first stage of combusting the carbon binder material of the air electrode, the cell was further heated to 800°C with an applied compression force of 100 g/cm². During this heating, the unit did not become deformed.

The cell unit was then allowed to sinter for two hours. During the high temperature treatment the oxygen in the enclosed volume reacted with metallic surfaces, but not enough to cause any mechanical deformations. The oxygen was thereby consumed, and only a very insignificant amount of further oxygen from the surroundings was able to leak in through the microcracks. The cell unit was then allowed to cool down without further complications. After reaching room temperature, the unit now had a sintered cathode which could be inspected.

In the final step, the cell unit was cut at the proper location of the manifold holes according to the stack design. This was done using a combination of drilling and milling. Once the holes have been milled to the correct shape, some minor clean-up, such as deburring, will need to be done.

After addition of an appropriate stack sealing material, the unit is ready for stacking.

## Claims

1. A process for sintering the air electrode of a temporarily sealed metal-supported solid oxide cell, said process comprising
a first process of protecting the porous metal of the cell through covering said porous metal with a non-porous metal sheet, thereby creating an enclosure, which is done by attaching the fuel electrode of a cell not having a sintered air electrode towards a non-porous metal object, thereby forming a seal located within the perimeter of the cell while not exposing the cell support area outside the sealing zone to temperatures higher than 500°C in air for more than 30 minutes, and further comprising
a second process of heating the un-sintered air electrode layer as applied to the cell to a temperature higher than 700°C in the presence of a gas with a non-reducing composition while preventing exposure of the enclosed active area of the fuel electrode to the same gas by action of the seal and without any additional flow of gases containing hydrogen.

2. The process according to claim 1, wherein the protection of the porous metal is obtained by welding the non-porous metal sheet to the appropriate side of the cell along the perimeter of said cell.

3. The process according to claim 1, wherein the air electrode of the solid oxide cell is sintered at temperatures between 750°C and 900°C.

4. The process according to any of the claims 1-3, wherein a compression force of between 10 and 1000 g/cm² is applied to the cell.

5. The process according to any of the claims 1-4, wherein either there is a vacuum inside the sealed cell or the gas enclosed inside the sealed cell is selected from the group consisting of ambient air, nitrogen, noble gases and any of these in combination with up to 5% hydrogen.

6. The process according to any of the claims 1-5, wherein the non-porous metal object is an interconnect for use in a solid oxide cell stack.

7. A sealed solid oxide cell comprising a sintered air electrode prepared according to any of the claims 1-6.

8. A process of preparing a solid oxide cell stack comprising the steps of:
(a) preparing sealed solid oxide cells according to claim 7,
(b) cutting inlet/outlet holes into the area of the sealed solid oxide cells and into the area of their adjoined interconnects,
(c) applying an electrically non-conducting stack sealing material into the air electrode face of the solid oxide cells and
(d) stacking and sealing the cells.

9. The process according to claim 8, wherein the sealing material of step (c) is a glass having a softening point below 775°C.

10. The process according to claim 8 or 9, wherein the stack conditioning temperature is below 775°C.

11. A solid oxide cell stack prepared by a process according to any of the claims 8-10.

12. A solid oxide cell stack according to claim 11, which is a solid oxide fuel cell stack.

13. A solid oxide cell stack according to claim 11, which is a solid oxide electrolysis cell stack.
